# EUROPÄISCHE PATENTANMELDUNG

(11) **EP 2 330 380 A1**
(43) Veröffentlichungstag der Anmeldung: **08.06.2011**
(21) Anmeldenummer: 10015183.6
(22) Anmeldetag: 01.12.2010
(51) Int. Cl.: G01B 11/06, G01B 17/02

(54) **Berührungslose Rohrwanddickenmessvorrichtung und Rohrwanddickenmessung**

(30) Priorität: 04.12.2009 DE 102009056742; 24.02.2010 DE 102010009189; 25.06.2010 DE 102010025144
(71) Anmelder: SMS Meer GmbH, 41069 Mönchengladbach (DE)
(72) Erfinder: Sauerland, Martin, Dipl.-Ing., 41069 Möchengladbach (DE); Pehle, Hans-Joachim, Dipl.-Ing., 41069 Möchengladbach (DE); Haverkamp, Mark, 41069 Mönchengladbach (DE)
(74) Vertreter: Reuther, Martin

(57) **Zusammenfassung**

Um eine konstruktiv einfach aufgebaute berührungslose Rohrwanddickenmessvorrichtung mit wenigstens zwei Laser-Ultraschall-Messköpfen bereit zu stellen, können bei der berührungslosen Rohrwanddickenmessvorrichtung wenigstens zwei Ultraschall-Messköpfe an einem gemeinsamen Schwenkgestell angeordnet sein, welches um eine Schwenkachse schwenkbar ist.

## Beschreibung

Die Erfindung betrifft eine berührungslose Rohrwanddickenmessvorrichtung sowie eine berührungslose Rohrwanddickenmessung, bei welcher die Wanddicke des Rohrs insbesondere mittels ablativ angeregten Ultraschalls gemessen wird.

Derartige berührungslose Rohrwanddickenmessvorrichtungen bzw. Rohrwanddickenmessungen sind beispielsweise aus der EP 1 102 033 A2 hinlänglich bekannt, bei welcher mehrere Laser-Ultraschall-Messköpfe auch gemeinsam um ein Rohr schwenkbar sind, wobei die schwenkbaren Messköpfe einzeln verstellbar in verschiedenen Winkellagen angeordnet werden, sodass eine Bedienperson bzw. ein Maschinenführer während des laufenden Betriebes die Winkellage der Scanner abweichend von einer Normalstellung, in welcher mit normaler Auflösung gemessen werden kann, so verstellt, dass er auf einer bestimmten Länge des Rohres den Messraster verdichtet und sich so praktisch eine Vergrößerung des Rohrausschnittes anzeigen lassen kann. Hierdurch kann das Auflösungsvermögen in Umfangsrichtung vergrößert werden.

Von diesem Stand der Technik ausgehend besteht die Aufgabe vorliegender Erfindung darin, eine konstruktiv einfacher aufgebaute berührungslose Rohrwanddickenmessvorrichtung, bei welcher die Wanddicke des Rohrs mittels ablativ angeregten Ultraschalls gemessen wird.

Diese Aufgabe wird durch eine berührungslose Rohrwanddickenmessvorrichtung mit wenigstens zwei Ultraschall-Messköpfen, bei welcher die Wanddicke des Rohrs mittels ablativ angeregten Ultraschalls gemessen wird, gelöst, welche sich dadurch auszeichnet, dass die beiden Ultraschall-Messköpfe an einem gemeinsamen Schwenkgestell, welches um eine Schwenkachse schwenkbar ist, angeordnet sind.

Das gemeinsame Schwenkgestell ermöglicht einerseits einen konstruktiv wesentlich einfacheren Aufbau, da die Schwenkbewegung der Messköpfe nicht über entsprechende Steuerungen synchronisiert werden müssen. Darüber hinaus ist für die Schwenkbewegung, welche in der Regel nicht mit zu großer Geschwindigkeit erfolgen muss, lediglich ein gemeinsamer Antrieb ausreichend, wenn die Rohrwanddickenmessvorrichtung im Übrigen in geeigneter Weise ausgestaltet ist.

Je nach konkreter Umsetzung vorliegender Erfindung ist es denkbar, dass das Schwenkgestell statt einer Schwenkbewegung eine Rotationsbewegung um ein zu messendes Rohr herum durchführt. Da es hierbei insbesondere für optische Leiter Begrenzungen gibt oder auch weitere Maßnahmen vorgesehen sein müssen, kann es ebenfalls vorteilhaft sein, ein zu messendes Rohr mehrmals zu umrunden, um nach mehreren kreisförmigen Bewegungen die Richtung zu ändern. Hierbei wäre die Zahl der Umdrehungen abhängig von der Leitungslänge, die um das Werkstück herum gelegt werden kann.

Insofern bezeichnet der Begriff "schwenken" im vorliegenden Zusammenhang eine Drehbewegung mit mäßiger Geschwindigkeit, die unter Umständen ihre Drehrichtung ändert.

Unter zunächst dem Verzicht auf die Möglichkeit eine Vergrößerung des Auflösungsvermögens in Umfangsrichtung kann auf baulich einfache Weise durch das gemeinsame Schwenkgestell ein stabiler Schwenkvorgang gewährleistet werden.

Mit dem Laser-Ultraschall-Wanddickenmessverfahren wird das klassische Prinzip der Ultraschall-Laufzeitmessung angewandt. Aus der Zeit für das Durchlaufen eines Ultraschallimpulses durch die Rohrwand ergibt sich bei bekannter Schallgeschwindigkeit die gesuchte Wanddicke. Durch die Verwendung optischer Methoden sowohl zur Anregung als auch zur Detektion der Ultraschallimpulse ist es möglich, die Messköpfe selbst in einem thermisch sicheren Abstand zum Messgut anzuordnen, sodass auch eine Heißwanddickenmessung mit Temperaturen in der Größenordnung von 1000°C durchgeführt werden kann. Zur Anregung werden beispielsweise hoch energetische Lichtimpulse im Infrarotbereich, erzeugt, von einem auf das Messgut bzw. auf das Rohr ausgerichteten, Dioden- oder Blitzlampen-gepumpten Laser, auf die Oberfläche gesandt und dort absorbiert, was größtenteils zur Verdampfung einer extrem dünnen Oberflächenschicht führt. Hierbei wird das Laserlicht beispielsweise mit einer Frequenz von 50 Hz oder mehr, vorzugsweise mit ca. 100 Hz, auf die Rohroberfläche gestrahlt. Hierdurch entsteht von der Rohroberfläche ausgehend ein Ultraschallimpuls, der senkrecht zur Rohroberfläche in die Rohrwand einläuft. Der so entstandene Ultraschallimpuls wird an der Rohrinnenoberfläche reflektiert, läuft zurück zur Außenoberfläche, wird erneut reflektiert usw., sodass in dem Rohr eine Ultraschall-Echofolge abnehmender Amplitude entsteht.

Hierbei versteht es sich, dass statt einer Ablation durch Laserlicht auch auf andere Weise eine entsprechende Ablation, welche einen Ultraschall anregt, erzeugt werden kann. So kann dieses beispielsweise durch magnetische Energie oder durch andere elektromagnetische Effekte erfolgen. Ebenso ist ein Bestrahlen mit Neutronen oder Protonen denkbar. Insoweit wird unter einer ablativen Anregung von Ultraschall jede Anregung von Ultraschall in einem Werkstück verstanden, bei welcher zumindest teilweise eine dünne Oberflächenschicht abgetragen wird.

Der reflektierte Ultraschallimpuls erzeugt auf der Rohraußenoberfläche Schwingungen, die wiederum berührungslos mithilfe eines zweiten Lasers im Dauerlichtbetrieb unter Ausnutzung des Doppler-Effektes erfasst werden können. Die im Vergleich zur Lichtfrequenz niederfrequente Ultraschallschwingung führt zu einer Frequenzmodulation des an der Materialoberfläche reflektierten Lichtes. Dieses reflektierte Licht bzw. der reflektierte Lichtkegel sind mithin der Träger des Ultraschallsignales und werden über eine lichtstarke Sammellinse und einen Lichtwellenleiter einem optischen Demodulator, beispielsweise einem konfokalen Fabry-Perot-Interferometer, zugeführt, dessen Ausgangssignal dann bereits die Ultraschall-Echofolge beinhaltet. Das Signal kann in an sich bekannter Weise weiter verstärkt, gefiltert und ausgewertet werden, wobei letztlich als Ausgangssignal Wanddickenwerte gewonnen werden können, die in einem zum System gehörenden Rechner weiter verarbeitet werden und insbesondere zur Ansteuerung eines vorgelagerten Walzwerks genutzt werden können.

Unmittelbar nachvollziehbar ist, dass anstelle einer Detektion des Ultraschalls mit Hilfe von Laserlicht bzw. Interferenz auch jede andere Möglichkeit einer entsprechenden Ultraschallmessung, über welche ein Laufzeitsignal ermittelt werden kann, zur Anwendung kommen kann.

Hierbei versteht es sich, dass durch die Reflektion der inneren Rohrwand letztlich die doppelte Wanddicke durch das Laufzeitsignal ermittelt wird.

Durch den beschriebenen Schwenkvorgang können die Messköpfe um ein Rohr herum kreisförmig bewegt werden, sodass die Qualität eines Rohres, beispielsweise eines nahtlosen Stahlrohres, welches gewöhnlich in drei Umformstufen, einem Lochen in einem Schrägwalzwerg, einem Strecken in einem Assel-, Konti- oder anderen Walzwerk, und einem Fertigwalzen in einem Maßwalzwerk oder Streckreduzierwalzwerk, hergestellt werden, überprüft werden kann. Hierbei richtet sich die Zahl der Messköpfe vorzugsweise nach der Art der verwendeten Walzwerke sowie nach den aus den Walzenanordnungen und den Anordnungen weiterer auf das Werkstück wirkender Baugruppen vorgegebenen Symmetrien. Auf diese Weise können Bereiche, welche besonders fehleranfällig sind, einer gezielten Kontrolle unterzogen werden.

Vorzugsweise erfolgt ein Schwenk um die Bruchteile von 360° entsprechend der Zahl der Messköpfe. Bei zwei Messköpfen erfolgt somit vorzugsweise ein Schwenk von ungefähr 180°, bei drei Messköpfen vorzugsweise ein Schwenk von ungefähr 120° und bei vier Messköpfen ein Schwenk von ungefähr 90° usw. Von einer Ruheposition ausgehend, ergeben sich mithin Schwenkwinkel von ± 90° bei zwei Messköpfen, ± 60° bei drei Messköpfen und ± 45° bei vier Messköpfen. Insofern berechnen sich die Schwenkwinkel in der Regel nach der Zahl n der Messköpfe nach: Schwenkwinkel = ± 360° / 2n. Es versteht sich hierbei, dass je nach konkreter Umsetzung vorliegender Erfindung ein Überlapp der Schwenkwege der jeweilig benachbarten Messköpfe erfolgen kann. Ebenso ist es denkbar, dass je nach zu vermessenden Werkstück bestimmte Bereich des Werkstücks nicht erfasst werden.

Wie bereits Eingangs erläutert, sind auch wesentlich größere Schwenkwinkel möglich, wobei in derartigen Fällen insbesondere eine Rotation um mehre Umdrehungen vorteilhaft sein kann. Hierbei überlappen sich die Messbereiche entsprechend und können zu einem vollständigen Bild ergänzt werden, wobei insbesondere der Vorteil besteht, dass die Drehrichtung nicht so häufig geändert werden muss.

Andererseits ist es auch möglich, kleinere Schwenkwinkel vorzusehen, insbesondere wenn lediglich an bestimmten Stellen mit Fehlern zu rechnen ist.

Andererseits sind die bei einer Drehrichtungsumklehr auftretenden Kräfte verhältnismäßig groß, sodass insbesondere bei kleinen Schwenkbewegungen unnötig große Aggregate notwendig wären.

Insbesondere aus diesem Grunde ist es vorteilhaft, wenn wenigstens einer der Ultraschall-Messköpfe beweglich an dem Schwenkgestell angeordnet ist. Für kleinere Bewegungen kann dann der beweglich an dem Schwenkgestell angeordnete Ultraschall-Messkopf separat bewegt werden, wozu wesentlich geringer Massen in Bewegung gesetzt werden müssen, sodass einerseits kleinere Aggregate zur Anwendung kommen können und andererseits höhere Frequenzen erreicht werden können. Insbesondere ist es auch möglich, die Messköpfe an lokal gegebene Unterschiede anzupassen.

So ist es insbesondere möglich, den Ultraschall-Messkopf radial zur Schwenkachse beweglich an dem Schwenkgestell anzuordnen. Hierdurch kann beispielsweise eine exzentrische Lage des zu vermessenden Rohres im Bezug auf die Schwenkachse lokal ausgeglichen werden. Hierdurch ist es möglich, insbesondere bei einer exzentrischen Lage, den jeweiligen Ultraschall-Messkopf in einem konstanten Abstand zu dem zu vermessenden Werkstück zu führen. Dieses ermöglicht es insbesondere, dass der Ultraschall-Messkopf zu allen Messzeiten möglichst optimal auf das Werkstück ausgerichtet werden kann. Dieses bezieht sich insbesondere auf dessen Abstand.

Eine radial zur Schwenkachse gerichtete Beweglichkeit kann darüber hinaus dazu genutzt werden, die berührungslose Rohrwanddickenmessvorrichtung schnell an unterschiedliche Rohrdurchmesser anzupassen.

Kumulativ bzw. alternativ hierzu kann der Ultraschall-Messkopf um eine von der Schwenkachse abweichenden Nickachse beweglich an dem Schwenkgestell angeordnet sein. Auf diese Weise kann der Ultraschall-Messkopf separat eine Nickbewegung durchführen, die naturgemäß ebenfalls höher frequent sein kann, da der Messkopf alleine eine wesentlich geringere Masse aufweist als sämtliche Messköpfe gemeinsam mit dem Schwenkgestell.

Insbesondere kann die Nickachse parallel zur Schwenkachse angeordnet sein, was einerseits einen besonders einfachen Aufbau und einen einfache Justage sicherstellt.

In diesem Zusammenhang versteht es sich, dass -je nach konkreter Getriebeanordnung zwischen Ultraschall-Messkopf und Schwenkgestell bzw. je nach Ausbildung der Lagerung des jeweiligen Ultraschall-Messkopfs an dem Schwenkgestell- die Nickachse auf oder in der Nähe der Schwenkachse liegen kann. Ebenso kann sie hiervon beabstandet sein, um beispielsweise eine exzentrische Lage des jeweiligen Werkstücks ausgleichen zu können, wobei die Nickachse hierzu bevorzugt außerhalb eines Transportbereichs eines Werkstücks durch die Rohrwanddickenmessvorrichtung angeordnet sein kann. Letzteres ist insbesondere dann möglich, wenn die Nickachse gemeinsam mit dem Ultraschall-Messkopf radial verlagerbar an dem Schwenkgestell angeordnet ist. Auf diese Weise kann gewährleistet werden, dass die Nickbewegung weitest gehend möglich der Oberfläche des zu vermessenden Werkstückes folgt. Andererseits kann es - je nach erwünschter Winkelauflösung - auch ausreichen, wenn die Nickachse deutlich von dem Werkstück beabstandet ist, da die Nickbewegung ohnehin lediglich mit kleinen Amplituden geplant ist.

Insbesondere ist es auch möglich, dass die Nickachse bezüglich der Schwenkachse geneigt angeordnet ist. Sie kann insbesondere auch senkrecht zu dieser vorgesehen sein. Insbesondere bei letztere Ausrichtung kann der Messkopf eine Kreisbewegung durchführen, die letztlich dann auch zu einer entsprechenden Kurvenbahn des auf der Rohrwandung gemessenen Gebiets führt, so dass auf Richtungsänderungen während des Nickens zur Gänze verzichtet werden kann. Dieses ist äußerst materialschonend und energetisch günstig. Je nach konkreter Ausrichtung der Nickachse und des Messkopfs bezüglich der Nickachse können auch komplexere Bewegungsabläufe umgesetzt werden, solange sichergestellt ist, dass das gemessene Gebiet auf der Rohrwandung in entsprechender Weise wandert.

Entsprechend der vorstehend dargestellten Ausgestaltung wird somit auch eine berührungslose Rohrwanddickenmessung vorgeschlagen, welche sich dadurch auszeichnet, dass das Schwenkgestell mit einer Schwenkfrequenz um die Schwenkachse und wenigstens einer der Messköpfe mit einer Nickfrequenz um die Nickachse bewegt werden, wobei die Schwenkfrequenz kleiner als die Nickfrequenz ist. Ebenso wird eine berührungslose Rohrwanddickenmessung vorgeschlagen, welche sich dadurch auszeichnet, dass das Schwenkgestell um eine Schwenkachse und wenigstens einer der Messköpfe um Nickachse bewegt werden, wobei die bei der Bewegung um die Nickachse bewegte Masse kleiner als die bei der Bewegung um die Schwenkachse bewegte Masse ist. Eine derartige Verfahrensführung ermöglicht einerseits seine Kontrolle des gesamten Werkstückumfangs durch die Schwenkbewegungen, während die Nickbewegung einer Detailüberprüfung beispielsweise besonders fehlerträchtiger Bereiche dienen kann.

Vorzugsweise ist die Nickgeschwindigkeit bzw. -frequenz wenigstens dreimal so hoch wie die Schwenkgeschwindigkeit bzw. -frequenz. Bei derartigen Geschwindigkeits- bzw. Frequenzverhältnissen können die verschiedenen Messvorgänge besonders optimal genutzt und eingesetzt werden.

Dem entsprechend ist es des Weiteren vorteilhaft, wenn die Amplitude der Nickbewegung wenigstens halb so groß wie die Amplitude der Schwenkbewegung ist.

Es versteht sich, dass Schwenk- und Nickbewegung nicht zwingend gleichzeitig durchgeführt werden müssen.

Da nicht ausgeschlossen werden kann, dass das zu vermessende Werkstück gegenüber der Schwenkachse des Schwenkgestells exzentrisch durch die berührungslose Rohrwanddickenmessvorrichtung läuft, ist es vom Vorteil, wenn die berührungslose Rohrwanddickenmessvorrichtung Mittel zur Bestimmung der radialen Werkstückposition aufweist. In diesem Zusammenhang sei darauf hingewiesen, dass die Bezeichnung "radial" auf senkrecht zur Bewegungsrichtung des Rohrs durch die Rohrwanddickenmessvorrichtung hindurch ausgerichtete Richtungen und Zuordnungen gerichtet ist. In Abhängigkeit von der radialen Werkstückposition können dann die Ultraschall-Messköpfe radial derart ausgerichtet werden, dass sie einen möglichst optimalen Abstand zur Oberfläche des zu vermessenden Werkstücks aufweisen. Eine derartige Abstandsoptimierung ist insbesondere dann vom Vorteil, wenn die optischen Lichtwege nicht sämtlich kolinear verlaufen bzw. wenn fokussierend wirksame optische Baugruppen zur Anwendung kommen, da auf diese Weise gewährleistet werden kann, dass die geneigten optischen Messstrahlen bzw. die fokussierten Strahlen möglichst optimal positioniert bleiben.

Als Positionsmessmittel können sämtliche Einrichtungen zur Anwendung kommen, die es ermöglichen, die Position eines Werkstücks im Bereich der berührungslosen Rohrwanddickenmessung zu bestimmen. Aus der Position kann gegebenenfalls unter Berücksichtigung des bekannten Rohrdurchmessers auf die Lage der Rohraußenmantelfläche rückgeschlossen werden.

Insbesondere können als Positionsmessmittel auch Abstandssensoren vorgesehen sein, welche den Abstand zwischen einer bekannten Baugruppe, beispielsweise einem feststehenden Gerüst oder Gestell aber auch dem Schwenkgestell oder den Ultraschall-Messköpfen und der Werkstückoberfläche, also der Rohraußenmantelfläche, unmittelbar messen. Durch diese Abstandsmessung kann dann letztlich auch auf die Position des gesamten Rohres geschlossen werden, wenn dieses tatsächlich erwünscht ist. Andererseits liefert diese Abstandsmessung die Lage der Rohraußenmantelfläche bzw. der Außenwandung des Rohrs, was letztlich insbesondere für die radiale Ansteuerung der Ultraschall-Messköpfe eine geeignete Messgröße darstellt.

Dementsprechend wird die Aufgabe vorliegender Erfindung auch durch eine berührungslose Rohrwanddickenmessvorrichtung gelöst, welche sich durch eine Einrichtung zur Messung der Rohroberfläche auszeichnet. Als Rohroberflächenmesseinrichtung können an sich insbesondere auch Abstandssensoren vorgesehen sein, insbesondere wenn diese beispielsweise über die Oberfläche geschwenkt und auf diese Weise ein Oberflächensegment durchmessen können. Ebenso können auch Abstandssensoren, die bereits ohne einen Schwenkvorgang ein ganzes Oberflächensegment erfassen können, zur Anwendung kommen. Durch derartige Rohroberflächenmesseinrichtungen lassen sich insbesondere Dellen und/oder Aufreißungen ermitteln, die naturgemäß durch eine Rohrwanddickenmessung nur sehr schwer, wenn überhaupt, erfassbar sind.

Vorzugsweise sind die Abstandssensoren derart angeordnet, dass sie den Abstand der Rohraußenwand auf Höhe der Ultraschall-Messung zu den Ultraschall-Messköpfen bestimmen können, um die vorstehend erläuterte Messaufgabe besonderes geeignet erfüllen zu können. Hierbei versteht es sich, dass kleinere Abweichungen hinsichtlich der wesentlichen bekannten Rohrgeometrien diesbezüglich unkritisch sind, solange die gewünschten Toleranzbereiche nicht verlassen werden.

Insbesondere können die Abstandssensoren beispielsweise an den Ultraschall-Messköpfen angeordnet sein. Dieses erleichtert eine Zuordnung einer Abstandsmessung bzw. eines entsprechenden Messsignals zu dem entsprechenden Ultraschall-Messkopf. Andererseits kann ein entsprechender Abstandssensor auch an dem vorstehend beschriebenen Schwenkgestell vorgesehen sein.

Als besonders geeignete Abstandssensoren haben sich an sich bekannte Lichtschnittsensoren herausgestellt, durch welche ein Oberflächenbereich in einem bestimmten Winkelsegment gescannt und erfasst werden kann. Hierbei sind Lichtschnittsensoren beispielsweise in der Lage einen Winkelbereich von 110° - also beinahe ein Drittel eines Kreises - räumlich zu erfassen. Insofern kann durch vier Lichtschnittsensoren die komplette Kreisoberfläche der Außenwand eines zu messenden Rohres gemessen werden. Bei der Verwendung von lediglich drei Lichtschnittsensoren verbleiben kleinere, nicht ohne Schwenkbewegung durchmessbare Bereiche, die bei geeigneter Anordnung der Lichtschnittsensoren jedoch in Raumpositionen vorgesehen sein können, die für das Messergebnis nur unwesentlich sind. Es versteht sich, dass, sowie geeignete Lichtschnittsensoren auch käuflich zu erwerben sind, entsprechend Lichtschnittsensoren mit größeren Erfassungswinkeln zur Anwendung kommen können. Dementsprechend können derartige Lichtschnittsensoren auch als Rohroberflächenmesseeinrichtung genutzt werden, wobei es sich versteht, dass dieses auch in Kombination mit einer Abstandsmessung erfolgen kann.

Insbesondere kann an wenigstens einem der Ultraschall-Messköpfe ein entsprechender Abstandssensor, vorzugsweise ein Lichtschnittsensor, vorgesehen sein. Auf diese Weise kann unabhängig von der Lage des Ultraschall-Messkopfes der relevante Abstand für diesen Ultraschall-Messkopf ermittelt werden. In Verbindung mit der Rohrwanddickenmessung kann somit lokal nicht nur die Rohrwanddicke sondern auch die Rundheit bzw. die genaue Ausgestaltung des Rohrquerschnittes entsprechend gemessen werden. Darüber hinaus ist es durch die Anordnung des Abstandsensors unmittelbar an dem Ultraschall-Messkopf konstruktiv einfach, einen Regelkreis zur radialen Anstellung des Ultraschall-Messkopfes in Bezug auf die Außenwandung des zu messenden Rohres vorzusehen. Im Ergebnis kann es ausreichen, diesen Regelkreis derart auszugestalten, dass der Abstand konstant gehalten wird und die radiale Position des Ultraschall-Messkopfes als Maß für die Position der Außenwand des zu messenden Rohres zu nutzen. Durch eine Schwenk- oder Nickbewegung des Ultraschall-Messkopfes wird darüber hinaus der Erfassungsbereich des Abstandssensors, und insbesondere des Lichtsensors, entsprechend erweitert.

Wie bereits Eingangs angedeutet, müssen derartige berührungslose Rohrwanddickenmessungen insbesondere bei verhältnismäßig heißen Rohren, welche Temperaturen weit über 800°C, insbesondere auch bis zu 1 200°C und darüber, aufweisen können, durchgeführt werden. Hierbei kann es gegebenenfalls zu Temperaturschwankungen kommen, welche gegebenenfalls auch die Schallgeschwindigkeit in dem Rohr und mithin das Messergebnis der Rohrwanddickenmessung beeinflussen können. Um etwaigen Messfehlem begegnen zu können, ist es vom Vorteil, wenn die berührungslose Rohrwanddickenmessvorrichtung einen Temperatursensor aufweist. Insbesondere kann ein derartiger Temperatursensor auch an wenigstens einem der Ultraschall-Messköpfe angeordnet sein und die Temperatur in der Umgebung oder an der eigentlichen Messstelle ermitteln. Auf diese Weise kann baulich einfach sichergestellt werden, dass die Temperatur an der für das Messergebnis wesentlichen Stelle gemessen wird. Darüber hinaus hat die Anordnung an dem Ultraschall-Messkopf noch den Vorteil, dass ohnehin dort vorhandene Aggregate, wie beispielsweise ein Kühlsystem, auch für den Temperatursensor genutzt werden können. Letzteres gilt selbstverständlich auch für einen Abstandssensor, der an den Ultraschall-Messköpfen vorgesehen ist.

Eine besonders einfache und kompakte Ausgestaltung folgt, wenn das Schwenkgestell die Schwenkachse umgreift, wodurch eine verhältnismäßig kompakte Bauweise gewährleistet werden kann. Durch das Umgreifen folgt unmittelbar ein radial innerhalb des Schwenkgestells vorgesehener Freiraum, durch welchen ein zu messendes Werkstück bzw. ein Rohr geführt werden kann. Vorzugsweise kann ein derartiges Umgreifen mittels eines im Wesentlichen kreisförmigen Grundaufbaus des Schwenkgestells gewährleistet werden.

Um Wartungsarbeiten zu erleichtern, kann das Schwenkgestell einen Havarieschlitz aufweisen, der es ermöglicht, das Schwenkgestell auch dann aus seiner Messposition zu verlagern, wenn ein Rohr im Bereich der Schwenkachse bzw. in dem umgriffenen Raum des Schwenkgestells zu finden ist. Auf diese Weise können einerseits entsprechende Wartungsarbeiten erleichtert werden. Andererseits wird die Rohrwanddickenmessvorrichtung geschont, da das heiße Rohr, welches möglicherweise in Havariefall dann unmittelbar in der Nähe des Schwenkgestells bzw. auch in der Nähe der Ultraschall-Messköpfe mit Temperaturen von 800 °C und höher zur Ruhe kommt, diese Baugruppen einer erheblichen Wärmebelastung unterzieht. Dieses gilt insbesondere dann, wenn zu Wartungsarbeiten jegliche Eigenbewegungen der Rohrwanddickenmessvorrichtung eingestellt werden müssen. Insoweit versteht es sich, dass ein derartiger Havarieschlitz in einem Schenkgestell bei Rohrmessvorrichtungen jeglicher Art für Rohre, die bei Temperaturen über 800 °C vermessen werden, auch unabhängig von den übrigen Merkmalen vorliegender Erfindung aus den vorstehend genannten Gründen vorteilhaft ist.

Dem entsprechend ist es vorteilhaft, wenn das Schwenkgestell von einer Messposition in eine Wartungsposition senkrecht zur Schwenkachse verlagerbar ist. Hierzu kann es beispielsweise an einem entsprechenden Tragegestell angeordnet sein, welches die vorstehend beschriebene Drehbewegung des Schwenkgestells ermöglicht und seinerseits von einer Messposition in eine Wartungsposition verlagerbar ist. Eine derartige Verlagerung des Tragegestells erfolgt vorzugsweise horizontal. Des Weiteren versteht es sich, dass das Schwenkgestell bezüglich des Tragegestells auch vertikal verlagerbar sein kann, beispielsweise für Nachjustagen bei einem Wechsel des Rohrdurchmessers oder auch für Wartungsarbeiten oder sonstige Zwecke.

Während es gegebenenfalls ausreichen kann, dass das Schwenkgestell lediglich um kleinere Winkelbereiche beispielsweise um ± 60° oder ± 45°, schwenkbar ist, um seine Messaufgaben erfüllen zu können, ist es vom Vorteil, wenn das Schwenkgestell zumindest in der Wartungsposition derart schwenkbar ist, dass jeder der Messköpfe in eine horizontale Position zu Wartungszwecken verlagert werden kann. Dieses bedeutet, dass bei drei Messköpfen vorzugsweise eine Schwenkmöglichkeit von wenigstens 90° in eine Richtung vorgesehen sein sollte, wenn einer der Messköpfe in seiner zentralen Messposition vertikal angeordnet ist. Selbiges gilt für Rohrwanddickenmessvorrichtungen, bei denen vier Messköpfe vorgesehen sind und wenigstens einer der Messköpfe vertikal angeordnet ist. Ist andererseits keiner der Messköpfe in seiner zentralen Messposition vertikal angeordnet, so können entsprechend geringere Schwenkmöglichkeiten für Wartungszwecke ausreichen.

Der Vorteil einer horizontalen Wartungsposition für die Ultraschall-Messköpfe ist, dass sämtliche Baugruppen bequem erreicht werden können und letztlich für das Wartungspersonal eine vorgegebene und gleiche Lage sämtlicher Baugruppen zur Verfügung gestellt werden kann.

Die Rohrwanddickenmessvorrichtung kann eine Prüfeinrichtung umfassen, die einen Testling, der von einer Ruhepostition in eine Prüfposition verlagerbar ist, umfasst, wobei der Testling in der Prüfposition im Messbereich der Ultraschall-Messköpfe also im Wesentlichen auf der Schwenkachse liegt, wenn das Gestell in seiner Wartungsposition angeordnet ist. Es versteht sich, dass ein derartiger Testling auch unabhängig von den übrigen Merkmalen vorliegender Erfindung, insbesondere auch unabhängig von dem Vorhanden-sein einer seperaten Wartungsposition, vorteilhaft ist, um schnell und betriebssicher eine derartige Messvorrichtung kalibrieren, justieren oder hinsichtlich seiner Funktion kontrollieren zu können.

Der Prüfvorgang kann hierbei Kalibrier- oder Justierzwecken aber auch einer Funktionskontrolle dienen.

Vorzugsweise ist der Testling in seiner Prüfposition rotierbar, um auf diese Weise verschiedene Messkonstelationen vorzugeben. Ebenso kann der Testling axial verlagerbar sein, um entsprechend verschiedene Messituationen darstellen zu können. Der Testling kann darüber hinaus Fehler oder Abweichungen aufweisen, die es gilt, bei der Prüfung mit der gewünschten Genauigkeit zu erfassen. Gegebenenfalls kann die Prüfeinrichtung über eine Heizung verfügen, um den Testling auch hinsichtlich der Temperatur den an sich zu messenden Werkstücken anzupassen.

Die vorliegende Erfindung eignet sich insbesondere für Heißrohre, als für Rohre mit einer Temperatur von über 750 °C, wie sie beispielsweise in Warmwalzwerken auftreten. Insbesondere bei derartigen Temperaturen ist mit einer sehr hohen Beanspruchung der Messköpfe zu rechnen. Darüber hinaus versteht es sich, dass vorliegende Erfindung nicht nur auf Rohre im engeren Sinne beschränkt ist, und beispielsweise auch auf die Messung von Wanddicken bei Hohlblöcken, Hülsen, Luppen bzw. Vorrohren zur Anwendung kommen kann. Insoweit bezeichnet der Begriff "Rohr" in vorliegendem Zusammenhang jedes Werkstück, welches eine Längserstreckungsrichtung und wenigstens eine zentrale sich längs erstreckende Öffnung aufweist.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung anliegender Zeichnung erläutert. In der Zeichnung zeigen:
- Figur 1: eine Frontansicht einer erfindungsgemäßen Rohrwanddickenmessvorrichtung;
- Figur 2: eine schematische Frontdarstellung der Messstrahlen der Laser-Ultraschall-Messköpfe der Rohrwanddickenmessvorrichtung nach Figur 1 in Bezug auf eine Walzenanordnung;
- Figur 3: eine schematische Darstellung der Bewegungsarten der Laser-Ultraschall-Messköpfe;
- Figur 4: einen schematischen Schnitt durch einen Laser-Ultraschall-Messkopf;
- Figur 5: einen schematischen Schnitt durch den Laser-Ultraschall-Messkopf nach Figur 4 in einer Darstellung senkrecht zu der Darstellung nach Figur 4; und
- Figur 6: einen schematischen Schnitt durch einen weiteren Laser-Ultraschall-Messkopf in ähnlicher Darstellung wie Figur 4.

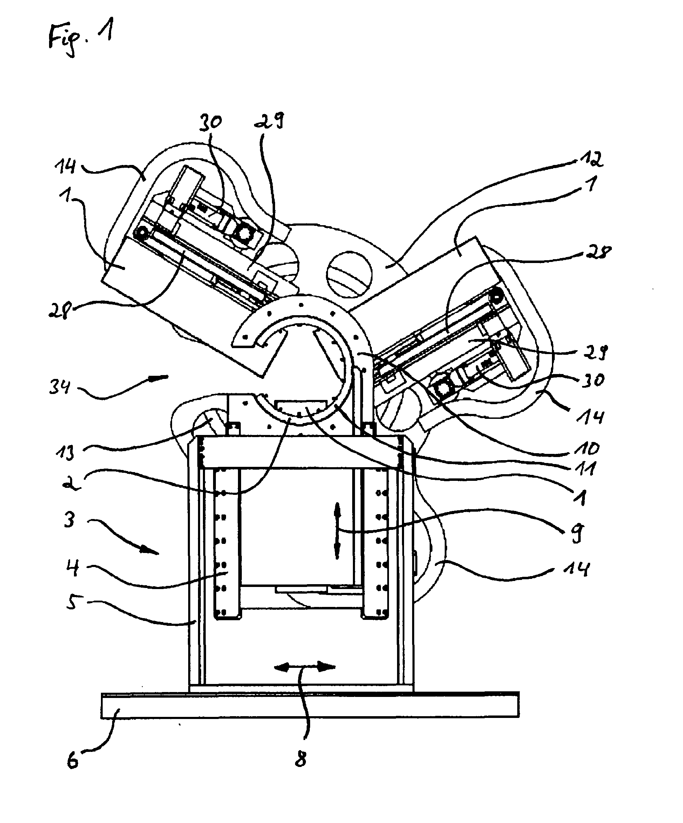

Die Rohrwanddickenmessvorrichtung nach Figur 1 weist drei Laser-Ultraschall-Messköpfe 1 auf, welche in einem Winkel von 120° zueinander an einem Schwenkgestell 2 beweglich angeordnet sind.

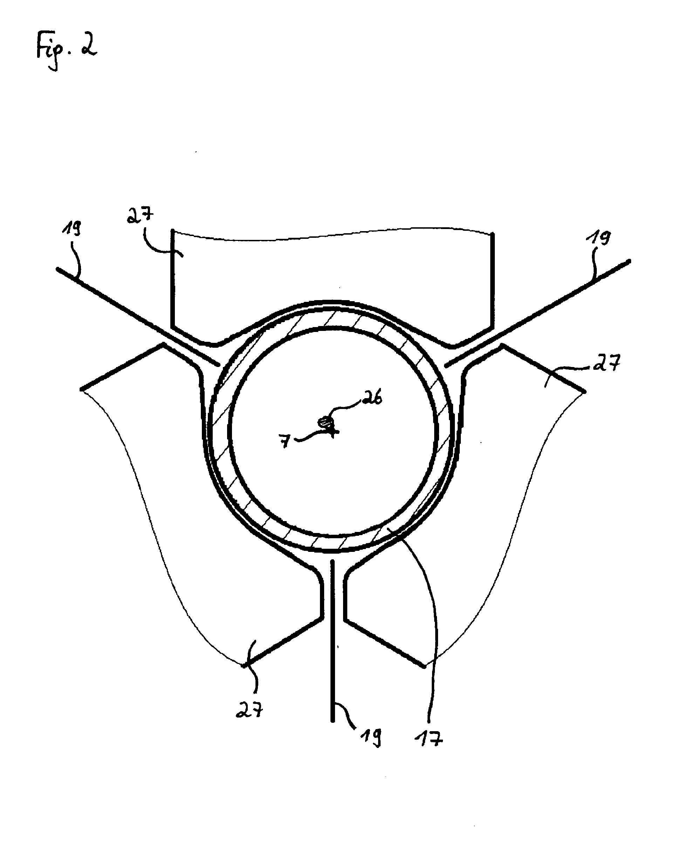

Das Schwenkgestell 2 ist um eine Schwenkachse 7 (siehe insbesondere Figur 2) dreh- bzw. schwenkbar an einem Tragegestell 3 angeordnet, welches seinerseits einen Hubtisch 4, einen Wagen 5 und eine Bodenplatte 6 umfasst. Hierbei ist der Wagen 5 horizontal, senkrecht zur Schwenkachse 7 (siehe Doppelpfeil 8) verlagerbar, während der Hubtisch 4 vertikal anstellbar an dem Wagen 5 gelagert ist (siehe Doppelpfeil 9). Auf diese Weise werden das Schwenkgestell 2 und mithin die Laser-Ultraschall-Messköpfe 1 senkrecht zur Schwenkachse 7 verlagerbar, sodass die Schwenkachse 7 dem entsprechend parallel versetzt werden kann.

Dieser Parallelversatz ermöglicht es, die Lage der Laser-Ultraschall-Messköpfe 1 an unterschiedliche Rohrdurchmesser anzupassen und zu Wartungszwecken in andere Positionen zu verfahren.

Der obere Bereich des Hubtisches 4 weist ein Drehlager 10 auf, in welchem ein entsprechendes Drehlager 11 des Schwenkgestells 2 drehbar umläuft. An dem Hubtisch 4 sind darüber hinaus - je nach konkreter Ausgestaltung dieses Ausführungsbeispiels - noch Messeinrichtungen sowie Reinigungseinrichtungen, wie beispielsweise Reinigungsdrüsen oder ähnliches vorgesehen.

Das Schwenkgestell 2 weist darüber hinaus einen Schwenkteller 12 auf, welcher einerseits die Laser-Ultraschall-Messköpfe 1 und andererseits ein Antriebszahnrad 13 trägt. Bei diesem Ausführungsbeispiel weist das Antriebszahnrad 13 an seiner Innenseite Zähne auf, in welche ein Ritzel (nicht dargestellt) eines Antriebsmotors (nicht dargestellt) entsprechend eingreift, um die Schwenkbewegung in gewünschter Weise anzusteuern. Am Außenrand des Zahnrads 13 ist darüber hinaus eine Auflage für eine Versorgungsleitung (nicht dargestellt) vorgesehen, welche notwendige Betriebsmittel, wie beispielsweise Kühlwasser, Strom, optische Leitungen oder sonstiges, die nachfolgend noch im Detail erläutert werden, entsprechend zu- bzw. abführt.

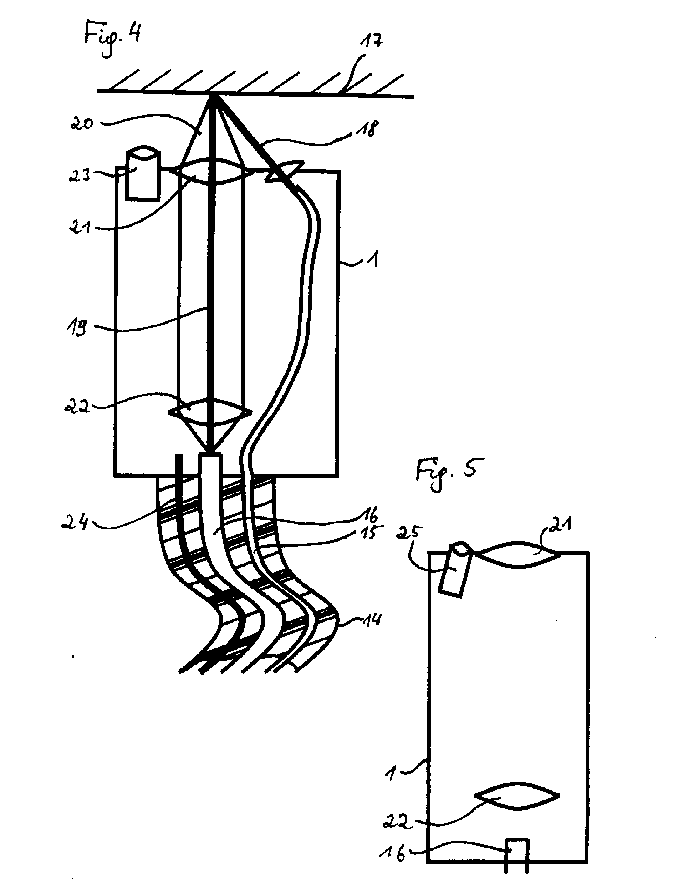

Von der nicht dargestellten Versorgungsleitung gehen jeweils einzelne Versorgungsleitungen 14 zu den jeweiligen Laser-Ultraschall-Messköpfen 1. In den Versorgungsleitungen 14 sind, wie beispielhaft in Figur 4 angedeutet, insbesondere 2 optische Lichtleiter 15, 16 sowie Kühlwasserleitungen und elektrische Stromversorgung (letztere beiden nicht dargestellt) vorgesehen, um an sich die Laser-Ultraschall-Messköpfe 1 in bekannter Weise betreiben zu können. Hierzu wird auf die Oberfläche eines Rohres 17 ein schräg gerichteter Laserstrahl 18 über ein Optik 19 und den Lichtleiter 15 gepulst eingestrahlt. Die hierdurch bedingten Ultraschallschwingungen - und insbesondere deren Reflektion - können dann über eine ebenfalls an sich bekannte optische Messeinrichtung gemessen werden, wobei aus der Laufzeit der Ultraschallimpulse die Rohrwanddicke ermittelt werden kann. Hierzu wird ein Laserstrahl 19 auf die Oberfläche des Rohres 17 gestrahlt und der Reflektionskegel 20 von einer Optik 21 erfasst. Während diese Vorgehensweise prinzipiell aus dem Stand der Technik bekannt ist, erfolgt letzterer Messvorgang bei diesem Ausführungsbeispiel konfokal, sodass der Laserstrahl 19 durch die selbe Optik 21 auf das Rohr 17 geleitet wird, durch welche auch der Reflektionskegel 20 erfasst wird. Dieses ermöglicht, sowohl den Laserstrahl 19 als auch das reflektierte Licht des Reflektionskegels 20 über einen gemeinsamen Kolimator 22, auf welchem je nach geeigneter Optik 21 gegebenfalls auch verzichtet werden kann, in den Lichtleiter 16 gemeinsam ein- bzw. auszukoppeln.

Darüber hinaus ist bei diesem Ausführungsbeispiel die optische Achse der Optik 21 senkrecht auf die Oberfläche des Rohres 17 gerichtet, sodass leichtere Abweichungen des Abstandes im Bezug auf diese Messung, bei welcher letztlich die Dopplerverschiebung, welche durch die Ultraschallschwingungen in dem Reflektionskegel 20 auftreten, gemessen werden, nicht ganz so kritisch sind. Darüber hinaus kann bei dieser Anordnung der Reflektionskegel 20 möglichst optimal erfasst werden. Andererseits versteht es sich, dass der Abstand zwischen Laser-Ultraschall-Messkopf 1 und Rohr 17 bedingt durch die Schrägstellung des Laserstrahls 18 nur in engen Grenzen variiert werden kann, ohne das Messergebnis zu stark negativ zu beeinflussen.

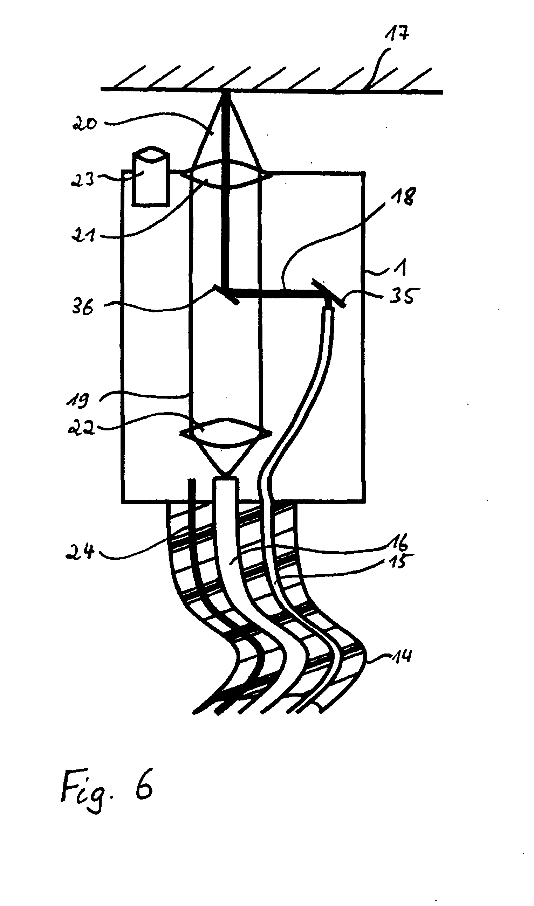

Bei dem Ausführungsbeispiel nach Figur 6 ist letztere Problemstellung dadurch beseitigt, dass auch der ablativ wirksame Laserstrahl 18 konfokal durch die Optik 21 geführt, indem er über zwei Spiegel 35, 36 auf die optische Achse in den Strahlengang aus Laserstrahl 19 und Reflektionskegel 20 eingekoppelt wird. Der zur Messung des Ultraschalls genutzte Laserstrahl 19 wird hierbei durch den Kollimator 22 aufgeweitet und entsprechend durch die Optik 21 fokussiert, so dass das zur Messung genutzte Anregungslicht des Laserstrahls 19 denselben optischen Weg durchläuft, wie das reflektierte, durch den Ultraschall modifiziert Licht des Reflektionskegels 20. Aufgrund dieser Aufweitung sind die durch den in dem Strahlengang des Laserstrahls 19 und des Reflektionskegels 20 angeordneten Spiegel 36 bedingten Verluste minimal.

Im Übrigen entspricht das Ausführungsbeispiel nach Figur 6 dem in den Figuren 4 und 5 dargestellten Ausführungsbeispiel, so dass dementsprechend identische Bezugsziffern benutzt werden und auf eine Wiederholung der technischen Zusammenhänge, die bei beiden Ausführungsbeispielen identisch sind, verzichtet wird.

Anstelle der Spiegel 35, 36 können, je nach konkreten Verhältnissen, auch halbdurchlässige Spiegel oder Prismen zur Anwendung kommen. Hierdurch kann beispielsweise die Stabilität des optischen Weges bzw. die Lichtausbeute verbessert werden, indem beispielsweise Totalreflexionen an Materialübergängen zum Umlenken der Lichtstrahlen bzw. indem beispielsweise die unterschiedlichen Frequenzen der Laserstrahlen 18, 19 und ihre unterschiedliche Wechselwirkung mit den Materialien eines entsprechend ausgewählten halbdurchlässigen Spiegels genutzt werden.

Die verhältnismäßig große Nähe des Laser-Ultraschall-Messkopfs 1 zu dem Rohr 17 bedingt, dass dieser in geeigneter und an sich bekannter Weise gekühlt werden muss. Hierauf braucht, da dieses aus dem Stand der Technik hinlänglich bekannt ist, nicht weiter eingegangen werden.

Der Laser-Ultraschall-Messkopf 1 beider Ausführungsbeispiele umfasst darüber hinaus einen Lichtschnittsensor 23, mittels dessen einerseits der Abstand des Laser-Ultraschall-Messkopfs 1 zur Oberfläche des Rohres 17 gemessen und für eine Abstandssteuerung benutzt werden kann. Andererseits kann durch den Lichtschnittsensor 23 ein Oberflächenbild der Oberfläche des Rohres 17 in einem Winkel von ungefähr 100° bis 110° senkrecht zur Rohrachse 26 gewonnen werden, sodass mittels dieser Information und dem Messergebnis hinsichtlich der Rohrwanddicke eine Aussage über die gesamte Qualität des Rohres getroffen werden kann.

In Figur 4 hinter der Optik 21 angeordnet, weisen die Laser-Ultraschall-Messköpfe 1 darüber hinaus noch einen Temperatursensor 25 auf, welcher ebenfalls leicht geneigt in dem jeweiligen Laser-Ultraschall-Messkopf 1 angeordnet ist und im Bereich, in welchem der Laserstrahl 19 auf das Rohr 17 trifft, die Temperatur des Rohres 17 misst. Auf diese Weise können thermisch bedingte Laufzeitschwankungen des Ultraschalls bei den Rohrwanddickenmessungen berücksichtigt werden. Es versteht sich, dass ggf. der Strahlengang des Temperatursensors 25 und/oder der Strahlengang des Lichtschnittsensors 23 ebenfalls kolinear durch die Optik 21 geführt werden können.

Die jeweiligen Messergebnisse des Lichtschnittsensors 23 bzw. des Temperatursensors 25 werden über Datenleitungen 24 ebenfalls aus dem Messkopf herausführt.

Wie insbesondere in Figur 2 angedeutet, ist zwar die Schwenkachse 7 durch die Geometrie der Drehlager 10, 11 geometrisch eindeutig definiert. Diese Aussage lässt sich leider für die Rohrachse 26 nicht treffen, da das Rohr naturgemäß während seines Herstellungsprozesses Schwankungen unterworfen ist, die beispielsweise durch entsprechende Walzen 27 (schematisch in Figur 2 angedeutet) bedingt sein können. So können beispielsweise Rohraußendurchmesser und Rohrinnendurchmesser verschiedene Achsenmittelpunkte aufweisen. Ebenso können unterschiedliche lokale Verwerfungen auftreten. Häufig sind derartige Fehler herstellungsbedingt und können den bei der Herstellung verwendeten Einrichtungen zugeordnet werden. So ist beispielsweise bei einer Drei-Walzen-Anordnung aus Walzen 27, wie diese in Figur 2 dargestellt sind, mit Störungen dritter Ordnung zu rechnen, welche insbesondere in den Walzenzwischenräumen der Walzen 27 zu finden sind. Werden zwei versetzt zueinander angeordnete Drei-Walzen-Anordnungen genutzt, so sind entsprechend Fehler sechster Ordnung zu erwarten. Entsprechend der erwarteten Fehlerordnungen empfiehlt es sich, die Laser-Ultraschall-Messköpfe 1 an dem Schwenkgestell 2 anzuordnen. Ebenso empfiehlt es sich, die Zahl der Laser-Ultraschall-Messköpfe 1 entsprechend der erwarteten Ordnung zu wählen, wobei in der Regel 2, 3 oder 4 Laser-Ultraschall-Messköpfe ausreichend sein sollten.

Um diesen Abweichungen schnell und betriebssicher Rechnung tragen zu können, sind die Laser-Ultraschall-Messköpfe 1 jeweils über einen Linearantrieb 28 mit dem Schwenkgestell 2 verbunden, wobei der Stator 29 des Lineartriebs 28 seinerseits drehbeweglich an dem Schwenkgestell 2 gelagert ist, wozu ein Linearantrieb 30 genutzt wird, welcher den Stator 29 um ein Drehgelenk (nicht dargestellt), welches eine Nickachse (nicht dargestellt) definiert, anstellen kann.

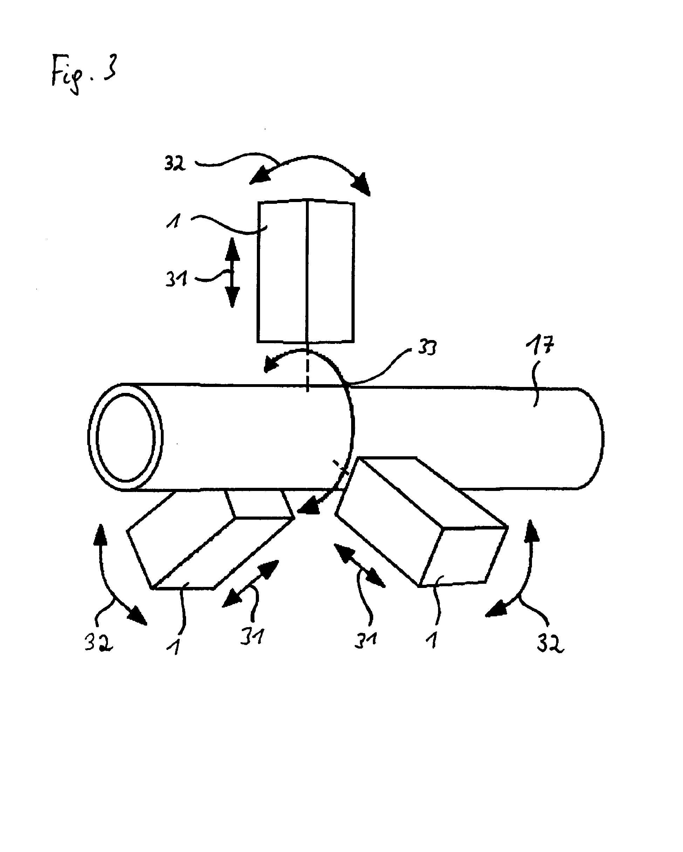

Mithin können die Laser-Ultraschall-Messköpfe 1 jeweils einzeln über die Lineartriebe 28 radial zur Schwenkachse 7 angestellt werden, was durch die Doppelpfeile 31 in Figur 3 beispielhaft dargestellt ist. Zumindest während des Messbetriebs kann die radiale Anstellung 31 über Abstandssensoren, wie insbesondere die Lichtschnittsensoren 23, unmittelbar geregelt werden. Bei diesem Ausführungsbeispiel kann der Hub beispielsweise 400 mm betragen.

Bedingt durch die Linearantriebe 30 und die nicht dargestellten Drehgelenke können die Laser-Ultraschall-Messköpfe 1 darüber hinaus jeweils einzeln eine Nickbewegung, dargestellt durch die Doppelpfeile 32 in Figur 3, durchführen. Diese Nickbewegung kann bei diesem Ausführungsbeispiel beispielsweise ± 15° umfassen und verläuft beispielsweise mit diesem Winkelausschlag um die in Figur 2 dargestellte Position der Laserstrahlen 19 herum. Durch diese Nickbewegung können somit Detailaufnahmen bestimmter Winkelbereiche des Rohres 17 aufgenommen werden, um so in diesen Gebieten ein sehr detailgetreues Bild des Rohres 17 zu erhalten. Hiermit gelingt es insbesondere Fehler an den fehlerträchtigsten Positionen gezielt aufzuspüren. Während bei diesem Ausführungsbeispiel die Nickachse radial außerhalb des Drehlagers 11 auf Höhe des Schwenktellers 12 angeordnet ist, ist es allerdings auch ohne Weiteres denkbar, durch eine geeignete Getriebeanordnung oder beispielsweise durch ein Hebelgestänge die Nickachse weiter nach radial innen zu verlagern. Selbiges kann beispielsweise durch Kulissenführungen oder ähnlichen Einrichtungen erreicht werden.

Hierbei ist unmittelbar nachvollziehbar, dass die Nickbewegung nicht zwingend um eine Achse erfolgen muss, welche im Wesentlichen parallel zur Rohrachse 26 bzw. zur Schwenkachse 7 ausgerichtet ist. Vielmehr kann diese Achse auch geneigt oder im Wesentlichen senkrecht zur Rohrachse 26 bzw. zur Schwenkachse 7 ausgerichtet sein. Insbesondere bei letzterer Ausrichtung, aber auch bei Abweichungen hiervon, kann statt einer Hin-und-Her-Bewegung beispielsweise als Nickbewegung auch eine Kreisbewegung durchgeführt werden, die eine entsprechende Bewegung des Fokusses des Messkopfs 1 auf der Rohroberfläche des Rohrs 17 bedingt.

Die Laser-Ultraschall-Messköpfe 1 können darüber hinaus um die Schwenkachse 7 mittels der Drehlager 10, 11, des Antriebszahnrads 13 sowie des zugehörigen Antriebs um ± 60° verschwenkt werden, um Messungen um den gesamten Rohrumfang durchzuführen, wie dieses durch den Doppelpfeil 33 in Figur 3 angedeutet ist. Hierbei können die Laser-Ultraschall-Messköpfe 1 bei dem in Figur 1 dargestellten Ausführungsbeispiel darüber hinaus gegen den Uhrzeigersinn (in Blickrichtung auf die Zeichenoberfläche der Figur 1) um 90° verschwenkt werden, sodass auch der senkrecht nach unten weisende Laser-Ultraschall-Messkopf 1 in eine horizontale Wartungsposition verlagert werden kann. Es versteht sich, dass gegebenenfalls auch größere Schwenkbewegungen oder gar eine reine Drehbewegung vorgesehen sein können, wobei dann gegebenenfalls bauliche Änderungen an den Drehlagern 10, 11, an dem Antriebszahnrad 13 sowie an dem Schwenkteller 12 vorgenommen werden müssten. Auch ist dann die Versorgung der jeweiligen Aggregate in entsprechender Weise sicherzustellen. Wesentliche bauliche Änderungen wären dann insbesondere eine Überbrückung eines Havariespaltes 34, welcher bei dem vorliegenden Ausführungsbeispiel sowohl in den Drehlagern 10, 11 als auch in dem Antriebszahnrad 13 und dem Schwenkteller 12 vorgesehen ist. Durch diesen Havariespalt 34 kann die gesamte Anordnung horizontal aus der Messposition in eine Wartungsposition verfahren werden, auch wenn sich noch ein Rohr 17 innerhalb des Messbereichs befindet.

Schon bedingt durch die unterschiedlichen Massen, die jeweils bewegt werden müssen, erfolgt das Nicken 32 mit einer wesentlich höheren Frequenz bzw. Nickgeschwindigkeit als das Schwenken.

Die horizontale Verlagerung 8 und die vertikale Verlagerung 9 dienen einerseits im wesentlichen Wartungszwecken, sie können jedoch auch für langsame Justierprozesse, wie sie beispielsweise bei einem Wechsel des Rohrdurchmessers, wenn andere Rohre bearbeitet und gemessen werden sollen, oder aber bei sehr großen aber langsamen Biegungen oder Krümmungen des Rohres auftreten können, genutzt werden.

Auch kann durch die vertikale Verlagerung 9 - je nach konkreter Umsetzung vorliegender Erfindung - der bauliche Aufwand hinsichtlich etwaiger Arbeiten an einem Fundament minimiert werden. Baut die entsprechende Walzstraße bzw. ein entsprechender Rohrförderer, in welchen die Rohrwanddickenmessvorrichtung zur Anwendung kommt, verhältnismäßig niedrig, so kann es notwendig sein, im Bereich der Rohrwanddickenmessvorrichtung ein etwaig vorhandenes Fundament zu öffnen, insbesondere damit wenigstens einer der Laser-Ultraschall-Messköpfe 1 auch unterhalb der Walzstraße bzw. des Rohrförderers zum Einsatz kommen kann. Durch die vertikale Verlagerung 9 können die Laser-Ultraschall-Messköpfe 1 frühzeitig, ggf. zunächst bzw. bereits nach eine kurzen horizontalen Verlagerung 8, angehoben werden, so dass dann weitere Fundamentarbeiten nicht notwendig werden. Eventuell ist es vorteilhaft, wenn hierzu der Havariespalt 34 anders ausgerichtet, beispielsweise nach unten geöffnet, wird, wobei ggf. auch der Wagen 5 entsprechend teilweise geöffnet und mit einem Havariespalt oder mit einer Havarieausnehmung versehen werden kann. Auch ist es denkbar, den Havariespalt 34 entsprechend zu vergrößern, was jedoch ggf. zu Verlusten in der Führungsleistung des Drehlagers 11 führen kann. Unter Umständen kann diesem durch einen geeigneten, im Havariefall entfernbaren Einsatz zur Verlängerung des Drehlagers 11 in den Havariespalt 34 begegnet werden.

Es versteht sich, dass eine Rohrwanddickenmessvorrichtung mit einer horizontalen Verlagerung 8 und die vertikale Verlagerung 9 zu einer Wartungsposition auch unabhängig von den übrigen Merkmalen vorliegender Erfindung vorteilhaft ist, um bei minimalen Fundamentarbeiten auch bei niedrigen Walzstraßen bzw. Rohrförderern, bei welchen die Rohrwanddickenmessvorrichtung zu Anwendung kommen soll, deren Einsatz zu ermöglichen. Dieses gilt insbesondere im Zusammenspiel mit einem Havariespalt und dessen geeigneter Ausrichtung bzw. -gestaltung.

### Bezugszeichenliste:

- 1: Laser-Ultraschall-Messkopf
- 2: Schwenkgestell
- 3: Tragegestell
- 4: Hubtisch
- 5: Wagen
- 6: Bodenplatte
- 7: Schwenkachse
- 8: horizontale Verlagerung
- 9: vertikale Verlagerung
- 10: Drehlager
- 11: Drehlager
- 12: Schwenkteller
- 13: Antriebszahnrad
- 14: Versorgungsleitung
- 15: Lichtleiter
- 16: Lichtleiter
- 17: Rohr
- 18: Laserstrahl

- 19: Laserstrahl
- 20: Reflektionskegel
- 21: Optik
- 22: Kollimator
- 23: Lichtschnittsensor
- 24: Datenleitung
- 25: Temperatursensor
- 26: Rohrachse
- 27: Walzen
- 28: Lineartrieb
- 29: Stator
- 30: Linearantrieb
- 31: radiale Anstellung
- 32: Nicken
- 33: Schwenken
- 34: Havariespalt
- 35: Spiegel
- 36: Spiegel

## Patentansprüche

1. Berührungslose Rohrwanddickenmessvorrichtung, bei welcher die Wanddicke des Rohrs mittels ablativ angeregten Ultraschalls gemessen wird, **dadurch gekennzeichnet, dass** wenigstens zwei Ultraschall-Messköpfe an einem gemeinsamen Schwenkgestell angeordnet sind, welches um eine Schwenkachse schwenkbar ist.

2. Vorrichtung nach Anspruch 1, **dadurch gekennzeichnet, dass** wenigstens einer der Ultraschall-Messköpfe beweglich an dem Schwenkgestell angeordnet ist.

3. Vorrichtung nach Anspruch 2, **dadurch gekennzeichnet, dass** der Ultraschall-Messkopf radial zur Schwenkachse beweglich an dem Schwenkgestell angeordnet ist.

4. Vorrichtung nach Anspruch 2 oder 3, **dadurch gekennzeichnet, dass** der Ultraschall-Messkopf um eine von der Schwenkachse abweichenden Nickachse beweglich an dem Schwenkgestell angeordnet ist.

5. Vorrichtung nach Anspruch 4, **dadurch gekennzeichnet, dass** die Schwenkachse parallel zur Nickachse angeordnet ist.

6. Vorrichtung nach Anspruch 5, **dadurch gekennzeichnet, dass** die Nickachse außerhalb eines Transportbereichs durch die Rohrwanddickenmessvorrichtung angeordnet ist.

7. Vorrichtung nach Anspruch 4, **dadurch gekennzeichnet, dass** die Nickachse bezüglich der Schwenkachse geneigt angeordnet ist.

8. Berührungslose Rohrwanddickenmessvorrichtung, bei welcher die Wanddicke des Rohrs mittels ablativ angeregten Ultraschalls gemessen wird, **gekennzeichnet durch** Mittel zur Bestimmung der radialen Werkstückposition.

9. Vorrichtung nach Anspruch 8, **dadurch gekennzeichnet, dass** die Positionsbestimmungsmittel wenigstens einen Abstandssensor umfassen.

10. Vorrichtung nach Anspruch 9, **dadurch gekennzeichnet, dass** der Abstandsensor an wenigstens einem Ultraschall-Messkopf vorgesehen ist.

11. Berührungslose Rohrwanddickenmessvorrichtung, **gekennzeichnet durch** wenigstens eine Einrichtung zur Messung der Rohroberfläche.

12. Vorrichtung nach Anspruch 11, **dadurch gekennzeichnet, dass** die Rohroberflächenmesseinrichtung einen Lichtschnittsensor umfasst.

13. Berührungslose Rohrwanddickenmessvorrichtung, bei welcher die Wanddicke des Rohrs mittels ablativ angeregten Ultraschalls gemessen wird, **gekennzeichnet durch** wenigstens einen Ultraschall-Messkopf, an dem ein Temperatursensor vorgesehen ist.

14. Vorrichtung nach einem der vorstehenden Ansprüche, **dadurch gekennzeichnet, dass** das Schwenkgestell die Schwenkachse, vorzugsweise bis auf einen Havarieschlitz, umgreift.

15. Vorrichtung nach einem der vorstehenden Ansprüche, **dadurch gekennzeichnet, dass** das Schwenkgestell von einer Messposition in eine Wartungsposition senkrecht zur Schwenkachse, insbesondere horizontal, verlagerbar ist.

16. Vorrichtung nach Anspruch 15, **gekennzeichnet durch** eine Prüfeinrichtung, die eine Testling umfasst, der von einer Ruheposition in einer Prüfposition verlagerbar ist, in welcher er im Messbereich der Ultraschall-Messköpfe liegt, wenn das Gestell in seiner Wartungsposition angeordnet ist.

17. Vorrichtung nach Anspruch 16, **dadurch gekennzeichnet, dass** der Testling über einen Drehantrieb mit der Prüfeinrichtung verbunden ist.

18. Berührungslose Rohrwanddickenmessung, bei welcher die Wanddicke des Rohrs mittels ablativ angeregten Ultraschalls gemessen wird, **dadurch gekennzeichnet, dass** wenigstens zwei Ultraschall-Messköpfe an einem gemeinsamen Schwenkgestell angeordnet sind und das Schwenkgestell mit einer Schwenkfrequenz um eine Schwenkachse und wenigstens einer der Messköpfe mit einer Nickfrequenz um eine Nickachse bewegt werden, wobei die Schwenkfrequenz kleiner als die Nickfrequenz ist.

19. Berührungslose Rohrwanddickenmessung, bei welcher die Wanddicke des Rohrs mittels ablativ angeregten Ultraschalls gemessen wird, **dadurch gekennzeichnet, dass** wenigstens zwei Ultraschall-Messköpfe an einem gemeinsamen Schwenkgestell angeordnet sind und das Schwenkgestell um eine Schwenkachse und wenigstens einer der Messköpfe um Nickachse bewegt werden, wobei die bei der Bewegung um die Nickachse bewegte Masse kleiner als die bei der Bewegung um die Schwenkachse bewegte Masse ist.

20. Messung nach Anspruch 18 oder 19, **dadurch gekennzeichnet, dass** die Nickachse von der Schwenkachse abweicht.

21. Messung nach einem der Ansprüche 18 bis 20, **dadurch gekennzeichnet, dass** wenigstens einer der Messköpfe während des Schwenkens und/oder während des Nickens radial verlagert wird.

22. Messung nach Anspruch 21, **dadurch gekennzeichnet, dass** die radiale Verlagerung abhängig von einer Position einer Außenwand des zu messenden Rohrs erfolgt.
